# EUROPEAN PATENT SPECIFICATION

(11) **EP 3 190 313 B1**
(45) Date of publication and mention of the grant of the patent: **30.10.2019**
(21) Application number: 17150777.5
(22) Date of filing: 10.01.2017
(51) Int. Cl.: F16H 27/08, F16H 27/04, F16H 57/08

(54) **CARRIER BODY WITH PINS SECURED ON A PITCH DIAMETER**
TRÄGERKÖRPER MIT AN EINEM FLANKENDURCHMESSER GESICHERTEN STIFTEN
CORPS DE SUPPORT AYANT DES TIGES FIXÉES SUR UN DIAMÈTRE DE PAS

(30) Priority: 11.01.2016 CZ 20160012
(43) Date of publication of application: 12.07.2017
(73) Proprietor: VÚTS, a.s., Liberec XI - Ruzodol I 460 01 Liberec (CZ)
(72) Inventor: Stejskal, Josef, 460 01 Liberec 33 (CZ)
(74) Representative: Musil, Dobroslav

(56) References cited:
- WO-A1-2014/193296
- DE-U1-202010 002 619
- JP-U- H0 564 560
- US-A1- 2006 154 778

## Description

### Technical field

The invention relates to a carrier body with pins secured on a pitch diameter against spontaneous release, where the pins are mounted on the carrier body replaceably and are situated on a common pitch circle.

### Background art

In many technical applications, cylindrical pins situated in holes on a common pitch circle on a revolving shaft are used. On the shaft, these pins are mounted undetachably or replaceably. If the pins mounted replaceably are used, it is necessary to secure these pins for their positioning in a constant position.

There is an arrangement in which the pins are secured with screws, so called set screws, which pass to a groove in the pins. These screws are screwed in the body carrying the pins and secure each pin individually. This embodiment requires threading in each hole for the secured pin, which is demanding, and if this solution is realized in the radial direction, it enlarges the diameter of the body carrying the pins. Using other than radial direction is, on the other hand, limited by the space arrangement and the possibility of machining, so it is not possible to lower the necessary diameter of the body carrying the pins. As a result, this is connected with a greater moment of inertia with a negative impact on the dynamics of the device, the consumption of material and higher production costs.

In another known embodiment, the pins are secured with an axial screw in the stepped hole. This solution increases the width of the carrier body and it can be limited by the feasibility of the step of the hole for the pins and by the fact that the thread in the pins, which, unlike the carrier body, are hardened, is a complication making the production more costly.

From DE 20 2010 002619 U1 is known carrier body with pins secured on a pitch diameter against spontaneous release, where the pins are axially mounted on the carrier body replaceably and are situated on a common pitch circle. The pins are secured with screws, which increase diameter, mounting time and costs.

From US 2006/154778 is known pinion pin securement apparatus for planetary carrier assembly, in which pins are inserted in holes in the carrier body and pins have peripheral groove on its end part outside the carrier body in front of the face of the carrier body. The carrier body itself is provided with circumferential groove. Between the grooves in pins and the groove in carrier body there is axial distance. The face part of the carrier body is covered with locator ring, which is based on bayonet principle. The locator ring has on its outer diameter tabs or protuberances suitable for inserting through slots into groove in carrier. At the same time the locator ring has on its inner diameter recesses passing over pins. By deploying of the locator ring to the face of the carrier body, the tabs or protuberances on outer diameter of the locator ring enters the slots on outer diameter of the carrier body and at the same time the recesses on inner diameter of the carrier body pass over the pins. Only after rotation of the locator ring, the tabs or protuberances on outer diameter of the locator ring enters the groove on outer diameter of the carrier body and in the same time wall of the inner diameter of the locator ring enters the grooves in pins. Locator ring is rotation locking member in which the pins have its own locking part of the ring and carrier body has different part of of locator ring as the locking member. The pins and carrier body are secured with special locator ring on bayonet principle, with axial distance between securing grooves and walls, which increase complexity and costs.

The aim of the invention is to remove or at least minimize the disadvantages of the background art, especially with respect to minimization of the moment of inertia of the assembly.

### Principle of the invention

The aim of the invention is achieved by a carrier body with pins secured on a pitch diameter, the principle of which consists in the fact that the first perimeter groove of the pins fitting to holes in the carrier body for the secured pins, the first perimeter groove of the pins corresponds with a second perimeter groove in the carrier body, and in addition to the second perimeter groove in the carrier body and the first perimeter grooves in the pins a common safety ring suitable for fixing the pins in the holes of the carrier body is mounted.

In positioning the pins with the first perimeter groove into the alignment with the second perimeter groove in the carrier part, it is possible to limit the movement of the pins axially by a grip of the safety ring. The advantage is the absence of threads, simple realization of the grooves and saving material on the perimeter of the body (maximum reduction of the moment of inertia). In principle, one safety ring in this manner fixes at least two pins situated in the body on the common pitch circle. This solution is advantageous especially because of lower labour consumption, reduction of the carrier body size, which in case of rotation leads to improved dynamics of the assembly. From the point of view of the production demands and maintaining the load capacity and durability, this solution is advantageous especially for lower labour input and material consumption. From the point of view of advantageous action of the force and reduction of the inertia force effect, it is possible to achieve higher average revolutions in uneven movements.

### Description of drawings

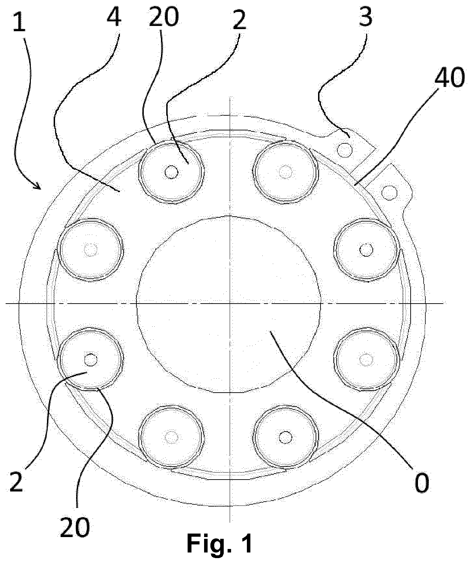

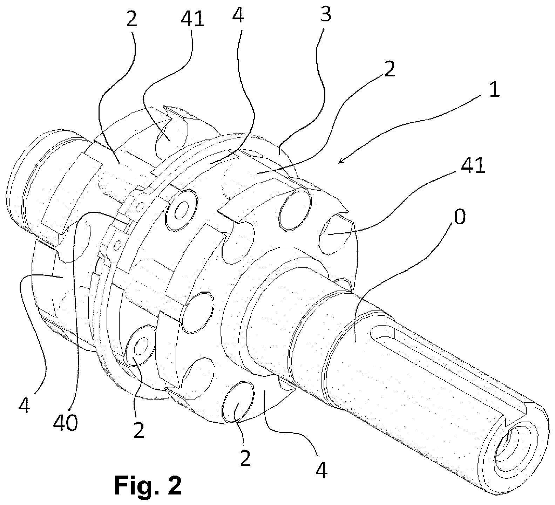

The invention is schematically represented in the drawing where Fig. 1 shows an arrangement for securing the pins on the pitch diameter in a front view and Fig. 2 shows an arrangement for securing the pins on the pitch diameter in a 3D view.

### Examples of embodiments

The invention will be described on an example of embodiment of securing pins **2** on a common pitch diameter in a carousel **1** of a stepper gearbox. A stepper gearbox is a mechanism, the input shaft of which rotates in a continuous rotation movement and the output shaft, i.e. the carousel **1,** rotates in the intermittent rotation movement with defined angles of rotation in each step, whereby the output shaft, i.e. the carousel **1,** is between individual rotations in the rest position, i.e. it does not move.

The carousel **1** of the stepper mechanism is a rotary part which contains a shaft **10,** on which at least two discs **4** are mounted and between them, on the common pitch diameter and in defined angle distances according to the required size of the transmission step, pins **2** are mounted. In operation, the pins **2** grip the input part of the gearbox, which is not shown, and by this grip, the step movement of the shaft **10** is produced.

At least one of the discs **4** is provided with a second perimeter groove **40,** which passes to the holes **41** for positioning the pins **2,** and the pins **2** are on their outer perimeters provided with a corresponding groove **20,** so that the second perimeter groove **40** in the disc **4** follows after the first perimeter grooves **20** in the pins **2** situated in the disc **4**.

In the second perimeter groove **40** of the disc **4** is mounted a safety ring **3,** which is a known machinery component for securing individual pins **2** against shifts. The safety ring **3** extends as far as to the first perimeter groove **20** in each pin **2** and, in this manner, all engaged pins **2** on the particular disc **4** are secured by one safety ring **3.**

The pins **2** are provided with a first perimeter groove **20** either on the whole of their perimeters or only on a part of the perimeter length, by which the size of the carrier section of the pins **2** is saved and the pin **2** rotation in the hole **41** is enabled or set. For example, if the first perimeter groove **20** in the pins is formed only on a part of the pin **2** perimeter, the safety ring **3** prevents both the shift and rotation of the pin **2** in the hole **41.** If the first perimeter groove **20** in the pins **2** is formed only on a partial section of the pin **2** perimeter, but its length is greater than the minimum length needed for complete fitting of the safety ring **3** in the first perimeter groove **20** in the pin **2,** the range of possible rotation of the pin **2** in its hole **41** is determined.

In the example of embodiment in Fig. 2, the carousel **1** contains three parallel discs **4**, where some of the pins **2** are positioned with their ends in the first and the second discs **4** and other pins **2** are positioned with their ends in the second and the third discs **4.** The central, i.e. the second, disc **4** is provided with a second perimeter groove **40,** in which a safety ring **3** is mounted passing as far as to the first perimeter groove **20** in each of the pins **2** i.e. both in the pins **2** between the first and the second disc **4** and the pins **2** between the second and the third disc **4.** One safety ring **3** thus secures pins **2** in three discs **4.**

In the example of embodiment in Fig. 2, the outer diameter of the disc **4** with the safety ring **3** is smaller so that the holes **41** for pins **2** pass as far as to the perimeter wall of the disc **4,** so a part of the perimeter of these holes **41** for the pins **2** is removed. In this manner, not only the material of the disc **4** is saved but, at the same time, a smaller and easier opening of the safety ring **3** during its installation on the outer perimeter of the disc **4** is possible.

The invention can be generalized that in a carrier body with pins **2** is formed a second perimeter groove **40,** which passes to all the holes **41** for the secured pins **2,** whereby each pin **2** has on its perimeter a first perimeter groove **20** of the same width and of a corresponding depth so that a common safety ring **3,** when inserted into the second perimeter groove **40** in the carrier body, penetrates at the same time into the first perimeter groove **20** of each of the pins **2,** thus fixing the position of the pins **2** in the holes **41** of the carrier body.

### Industrial applicability

The arrangement for securing pins on a pitch diameter is applicable in the construction of machines and devices, e.g. stepper gearboxes, etc.

## Claims

1. A carrier body with pins (2) secured on a pitch diameter against spontaneous release, where the pins (2) are axially mounted on the carrier body replaceably and are situated on a common pitch circle, while the pins (2) have on their perimeter a first perimeter groove (20), **characterized by that** the first perimeter groove (20) of the pins (2) fitts to holes (41) in the carrier body for the secured pins (2), the first perimeter groove (20) of the pins (2) corresponds with a second perimeter groove (40) in the carrier body, and in addition to the second perimeter groove (40) in the carrier body and the first perimeter grooves (20) in the pins (2) a common safety ring (3) suitable for fixing the pins (2) in the holes (41) in the carrier body is mounted.

2. The carrier body according to Claim 1, **characterized by that** the groove (20) in the pins (2) is formed on a part of the perimeter of the pin (2).

3. The carrier body according to Claim 1, **characterized by that** the groove (20) in the pins (2) is formed on a part of the perimeter of the pin (2) and the length of the groove (20) is greater than the minimum length so that the safety ring (3) completely fits in the groove (20) in the pin (2).

4. The carrier body according to any of Claims 1 to 3, **characterized by that** the holes (41) for the pins (2) in the carrier body pass as far as to the perimeter wall of the carrier body.

5. The carrier body according to any of Claims 1 to 4, **characterized by that** the carrier body is a carousel (1) of a stepper gearbox.

## Patentansprüche

1. Tragkörper mit den Zapfen (2), die auf einem Teilkreisdurchmesser gegen unbeabsichtigte Lösung gesichert sind, wo die Zapfen (2) auf dem Tragkörper austauschbar axial gelagert sind und auf einem gemeinsamen Teilungsdurchmesser angebracht sind, wobei die Zapfen (2) auf ihrem Umfang die erste Umfangsnut (20) aufweisen, **dadurch gekennzeichnet, dass** die erste Umfangsnut (20) der Zapfen (2) in die Öffnungen (41) in dem Tragkörper für die zu sichernden Zapfen (2) eingreift, die erste Umfangsnut (20) der Zapfen (2) mit der zweiten Umfangsnut (40) in dem Tragkörper korrespondiert und darüber hinaus zu der zweiten Umfangsnut (40) in dem Tragkörper und in den ersten Umfangsnuten (20) in den Zapfen (2) ein gemeinsamer Sicherungsring (3) zur Fixation der Zapfen (2) in den Öffnungen (41) im Tragkörper gelagert ist.

2. Tragkörper nach dem Anspruch 1, **dadurch gekennzeichnet, dass** die Nut (20) in den Zapfen (2) auf einem Teil des Umfangs des Zapfens (2) gebildet ist.

3. Tragkörper nach dem Anspruch 1, **dadurch gekennzeichnet, dass** die Nut (20) in den Zapfen (2) auf einem Teil des Umfangs des Zapfens (2) gebildet ist und die Länge der Nut (20) größer als die Mindestlänge zum vollständigen Einrasten des Sicherungsrings (3) in die Nut (20) im Zapfen (2) ist.

4. Tragkörper nach einem der Ansprüche 1 bis 3, **dadurch gekennzeichnet, dass** die Öffnungen (41) für die Zapfen (2) in dem Tragkörper bis in die Umfangswand des Tragkörpers hin durchgehen.

5. Tragkörper nach einem der Ansprüche 1 bis 4, **dadurch gekennzeichnet, dass** der Tragkörper ein Karussell (1) vom Schrittgetriebe ist.

## Revendications

1. Corps de support avec les tourillons (2) sécurisés sur le diamètre d'écartement contre la libération spontanée, où les tourillons (2) sont montés axialement sur le corps de support de manière interchangeable et ils sont situés sur un cercle d'écartement commun, tandis que les tourillons (2) présentent une première rainure circonférentielle (20) sur leur circonférence, **caractérisé en ce que** la première rainure circonférentielle (20) des tourillons (2) s'étend dans les trous (41) du corps de support pour les tourillons à fixer (2), la première rainure circonférentielle (20) des tourillons (2) correspond à la deuxième rainure circonférentielle (40) dans le corps de support, et en plus dans la deuxième rainure circonférentielle (40) dans le corps de support et dans les premières rainures circonférentielles (20) dans les tourillons (2) une bague de sûreté commune (3) est prévue pour fixer les tourillons (2) dans les trous (41) dans le corps de support.

2. Corps de support selon la revendication 1, **caractérisé en ce que** la rainure (20) dans les tourillons (2) est formée sur une partie de la circonférence du tourillon (2).

3. Corps de support selon la revendication 1, **caractérisé en ce que** la rainure (20) dans les tourillons (2) est formée sur une partie de la circonférence du tourillon (2) et que la longueur de la rainure (20) est supérieure à la longueur minimale pour un engagement complet de la bague de sûreté (3) dans la rainure (20) dans le tourillon (2).

4. Corps de support selon l'une quelconque des revendications 1 à 3, **caractérisé en ce que** les trous (41) pour les tourillons (2) dans le corps de support s'étendent jusqu'à la paroi périphérique du corps de support.

5. Corps de support selon l'une quelconque des revendications 1 à 4, **caractérisé en ce que** le corps de support est un carrousel (1) de la boîte de vitesse pas à pas.
